# EUROPÄISCHE PATENTSCHRIFT

(11) **EP 3 458 289 B1**
(45) Veröffentlichungstag und Bekanntmachung des Hinweises auf die Patenterteilung: **13.05.2020**
(21) Anmeldenummer: 17721535.7
(22) Anmeldetag: 18.04.2017
(51) Int. Cl.: B60G 7/00, F16C 11/06

(54) **VERFAHREN ZUR HERSTELLUNG EINES FAHRZEUGBAUTEILS**
METHOD FOR PRODUCING A VEHICLE COMPONENT
PROCÉDÉ DE FABRICATION D'UNE PIÈCE DE VÉHICULE

(30) Priorität: 19.05.2016 DE 102016208579
(43) Veröffentlichungstag der Anmeldung: 27.03.2019
(73) Patentinhaber: ZF Friedrichshafen AG, 88046 Friedrichshafen (DE)
(72) Erfinder: EULERICH, Wolfgang, 49086 Osnabrück (DE); WELZEL, Andreas, 49191 Belm (DE); KOHLBRECHER, Guido, 49134 Wallenhorst (DE); AHLBRAND, Marcel, 49152 Bad Essen (DE)
(74) Vertreter: ZF Friedrichshafen AG
(86) Internationale Anmeldenummer: PCT/EP2017/059081
(87) Internationale Veröffentlichungsnummer: WO 2017/198402

(56) Entgegenhaltungen:
- DE-A1-102006 008 252
- DE-A1-102015 207 176
- DE-U1-202010 000 258

## Beschreibung

Die Erfindung betrifft ein Verfahren zur Herstellung eines Fahrzeugbauteils, mit den Verfahrensschritten: Einsetzen eines zumindest einseitig offenen Gelenkgehäuses in ein Durchgangsloch eines Verbindungsbauteils, stoffschlüssiges Verbinden des in das Durchgangsloch eingesetzten Gelenkgehäuses mit dem Verbindungbauteil, Beschichten des Gelenkgehäuses und des Verbindungsbauteils mit einem Oberflächenschutz, wobei das stoffschlüssige Verbinden des Gelenkgehäuses mit dem Verbindungbauteil vor dem Beschichten des Gelenkgehäuses und des Verbindungsbauteils mit dem Oberflächenschutz erfolgt, sodass das Gelenkgehäuse und das Verbindungbauteil im unbeschichteten Zustand stoffschlüssig miteinander verbunden werden, wobei das Gelenkgehäuse durch Schweißen stoffschlüssig mit dem Verbindungbauteil verbunden wird, und Montieren eines Gelenks durch Einsetzen eines einen Lagerbereich aufweisenden Gelenkinnenteils in das Gelenkgehäuse und Verschließen des Gelenkgehäuses, sodass der Lagerbereich in dem Gelenkgehäuse eingeschlossen wird und das Gelenkinnenteil sich aus dem Gelenkgehäuse heraus erstreckt, wobei das Gelenkgehäuse mit dem Verbindungsbauteil vor dem stoffschlüssigen Verbinden des Gelenkgehäuses mit dem Verbindungsbauteil kraftschlüssig verbunden wird.

Ein derartiges Verfahren ist aus der DE 10 2015 207 176 A1 bekannt. Die Schweißung wird hier mittels Schweißelektroden erzeugt, wobei ein Ringspalt verbleiben kann, der nachfolgend vor Korrosion geschützt werden muss.

Aus der DE 20 2010 000 258 U1 ist die Herstellung einer stoffschlüssigen Verbindung zwischen einem Gelenkgehäuse und einem Verbindungsbauteil bekannt, wobei auf zwei voneinander abgewandten Seiten des Verbindungsbauteils und somit beidseitig Schweißnähte bzw. Kehlnähte aufgesetzt werden.

DE 10 2006 008 252 A1 ist ein Verschweißen von zwei Haltelaschen auf zwei voneinander abgewandten Seiten eines Vorsprunges eines Gehäuses bekannt. Hierbei wird ein Kondensatorentladungs-Schweißverfahren eingesetzt.

Gemäß der DE 10 2015 205 628 A1 werden sowohl die Innenumfangsfläche des Durchgangslochs als auch die Außenumfangsfläche des Gelenkgehäuses mit einer Anlagekontur versehen, wobei während des Einsetzens des Gelenkgehäuses in das Durchgangsloch das Gelenkgehäuse mit seiner Anlagekontur in Einsetzrichtung an die Anlagekontur des Durchgangslochs angelegt wird. Anschließend wird das Gelenkgehäuse mit dem Verbindungsbauteil stoffschlüssig verbunden. Das Ausbilden der Anlagekonturen ist jedoch aufwändig und verursacht zusätzliche Kosten. Ferner muss das in das Durchgangsloch eingesetzte Gelenkgehäuse während des stoffschlüssigen Verbindens durch eine Positioniervorrichtung in Position gehalten werden, da die Anlagekonturen nur aneinander anliegen und somit eine unerwünschte Bewegung des Gelenkgehäuses relativ zu dem Verbindungsbauteil während des stoffschlüssigen Verbindens nicht auszuschließen ist. Auch hierdurch wird der Herstellungsaufwand erhöht.

Ferner offenbart die DE 10 2010 043 040 A1 ein Verfahren zur Herstellung eines Fahrwerkbauteils, wobei ein an seiner Außenseite vorbeschichtetes Strukturbauteil mit einer an ihrer Außenseite vorbeschichteten und zu einem Gelenk vormontierten Gelenkkartusche durch ein stoffschlüssiges Fügeverfahren dauerhaft fest verbunden wird. Dabei werden die Vorbeschichtungen der Gelenkkartusche und des Struktur-bauteils vor der Durchführung des stoffschlüssigen Fügeverfahrens bereichsweise entfernt.

Nachteilig ist dabei insbesondere, dass die zu fügenden Komponenten vor dem Fügen beschichtet sind und daher im Bereich der stoffschlüssigen Verbindung entschichtet werden müssen, damit die stoffschlüssige Verbindung wirksam hergestellt werden kann. Dies führt in Summe zu hohen Prozesskosten. Ferner kann das Loch zur Aufnahme der Gelenkkartusche nicht durch Stanzen ausgebildet werden, da das Stanzen die Wirksamkeit des bereits aufgebrachten Korrosionsschutzes des Strukturbauteils durch Beschädigung der Oberflächenbeschichtung beeinträchtigen würde (große Kraftwirkung im Oberflächen-Bereich). Zusätzlich ist das Stanzen ohne zusätzliches Entschichten im Schweißbereich nicht kompatibel zum Laserstrahlschweißen. Stanzen ist aber ein sehr kostengünstiges Verfahren und daher wünschenswert. Ein weiterer Nachteil ist, dass auf der Bundseite der Gelenkkartusche ein Spalt zwischen der Gelenkkartusche und dem aufnehmenden Strukturbauteil entsteht. Dieser Spalt ist verfahrensbedingt mindestens teilweise unbeschichtet und birgt daher die Gefahr der Spaltkorrosion. Ein weiterer Nachteil ist, dass dieser Spalt abhängig ist von der Ebenheit der Kontaktfläche auf der Strukturbauteilseite. Durch Unebenheiten der strukturbauteilseitigen Kontaktfläche zum Bund besteht die Gefahr der ungleichmäßigen bzw. ganz oder in Teilbereichen nicht vorhandenen bundseitigen Abstützung. Dies bewirkt eine geringe Belastbarkeit der Verbindung, da die Laserschweißnaht ganz oder zum großen Teil die Betriebslasten abstützen muss (einschnittige Verbindung), denn das vorhandene Loch zur Aufnahme der Gelenkkartusche hat auf Grund des Herstellverfahrens (Laserstrahlschneiden) eine kegelige Innenkontur. Da zum Laserstrahlschweißen aber ein bestimmtes Spaltmaß nicht überschritten werden darf, muss die größere Öffnung des kegeligen Lochs zur Bundseite zeigen. Dadurch und durch die relative Unebenheit des Strukturbauteils wird eine sichere zweischnittige Verbindung verhindert. Ein weiterer Nachteil ist, dass verfahrensbedingt im Fügebereich radial ein Spalt zwischen Gelenkkartusche und aufnehmendem Strukturbauteil vorhanden ist, der unbeschichtet ist. Dieser Spalt birgt die Gefahr der Spaltkorrosion.

Ausgehend hiervon liegt der Erfindung die Aufgabe zugrunde, ein Verfahren der eingangs genannten Art möglichst einfach realisieren zu können.

Diese Aufgabe wird durch ein Verfahren zur Herstellung eines Fahrzeugbauteils nach Anspruch 1 gelöst. Bevorzugte Weiterbildungen des Verfahrens sind in den Unteransprüchen und in der nachfolgenden Beschreibung gegeben.

Das Verfahren zur Herstellung eines Fahrzeugbauteils umfasst die Verfahrensschritte: Einsetzen eines zumindest einseitig offenen Gelenkgehäuses in ein Durchgangsloch eines Verbindungsbauteils, stoffschlüssiges Verbinden des in das Durchgangsloch eingesetzten Gelenkgehäuses mit dem Verbindungbauteil, Beschichten des Gelenkgehäuses und des Verbindungsbauteils mit einem Oberflächenschutz, wobei das stoffschlüssige Verbinden des Gelenkgehäuses mit dem Verbindungbauteil vor dem Beschichten des Gelenkgehäuses und des Verbindungsbauteils mit dem Oberflächenschutz erfolgt, sodass das Gelenkgehäuse und das Verbindungbauteil im unbeschichteten Zustand stoffschlüssig miteinander verbunden werden, Montieren eines Gelenks durch Einsetzen eines einen Lagerbereich aufweisenden Gelenkinnenteils in das Gelenkgehäuse und Verschließen des Gelenkgehäuses, sodass der Lagerbereich in dem Gelenkgehäuse eingeschlossen wird und das Gelenkinnenteil sich aus dem Gelenkgehäuse heraus erstreckt, und kraftschlüssiges Verbinden des Gelenkgehäuses mit dem Verbiridungsbauteil vor dem stoffschlüssigen Verbinden des Gelenkgehäuses mit dem Verbindungsbauteil.

Durch das kraftschlüssige Verbinden des Gelenkgehäuses mit dem Verbindungsbauteil vor dem stoffschlüssigen Verbinden des Gelenkgehäuses mit dem Verbindungsbauteil wird das Gelenkgehäuse während des stoffschlüssigen Verbindens von dem Verbindungsbauteil kraftschlüssig in Position gehalten, sodass auf eine zusätzliche Positioniervorrichtung während des stoffschlüssigen Verbindens verzichtet werden kann. Ferner kann auf eine Konturierung verzichtet werden, sodass das Durchgangsloch z.B. als einfaches zylindrisches Durchgangsloch und/oder durch einen einfachen Stanzvörgang ausgebildet werden kann. Auch kann ein in dem Durchgangsloch anzuordnender Verbindungsbereich der Außenumfangsfläche des Gelenkgehäuses als einfacher zylindrischer Bereich ausgebildet werden.

Ferner werden das Gelenkgehäuse und das Verbindungsbauteil im unbeschichteten Zustand stoffschlüssig miteinander verbunden. Hierdurch kann ein im Stand der Technik bekanntes und dem Vorbereiten des stoffschlüssigen Verbindens dienendes Entschichten eines vorbeschichteten Gelenkgehäuses und eines vorbeschichteten Verbindungsbauteils vermieden werden. Ferner kann ein zweites Beschichten von Gelenkgehäuse und Verbindungsbauteil vermieden werden. Ein zweites Beschichten erfolgt im Stand der Technik z.B. bei vorbeschichtetem Gelenkgehäuse und Verbindungsbauteil nach dem stoffschlüssigen Verbinden, um den Fügebereich vor Korrosion zu schützen.

Bevorzugt wird das Gelenkgehäuse, insbesondere vor seinem Einsetzen in das Durchgangsloch, bereitgestellt und/oder hergestellt. Vorteilhaft wird das Gelenkgehäuse, insbesondere vor seinem Einsetzen in das Durchgangsloch, als unbeschichtetes Gelenkgehäuse bereitgestellt und/oder hergestellt. Das Gelenkgehäuse wird vorzugsweise aus Metall hergestellt und/oder besteht vorzugsweise aus Metall. Vorteilhaft ist oder wird dem Gelenkgehäuse eine Gehäuseachse zugeordnet. Insbesondere ist oder wird das Gelenkgehäuse bezüglich der oder einer Gehäuseachse rotationssymmetrisch oder im Wesentlichen rotationssymmetrisch ausgebildet. Vorteilhaft ist oder wird die Außenumfangsfläche des Gelenkgehäuses zylindrisch oder im Wesentlichen zylindrisch ausgebildet. Bevorzugt ist oder wird das Gelenkgehäuse topfförmig ausgebildet. Das Gelenkgehäuse kann z.B. aus Blech und/oder aus Vollmaterial hergestellt werden. Vorzugsweise wird das Gelenkgehäuse durch Tiefziehen oder durch spanende Bearbeitung (wie z.B. Drehen) oder durch Fließpressen oder Warmfließpressen hergestellt.

Das Gelenkgehäuse umfasst insbesondere eine Montageöffnung, durch welche hindurch das Gelenkinnenteil in das Gelenkgehäuse eingesetzt wird. Bevorzugt umfasst das Gelenkgehäuse eine Gelenkinnenteilöffnung, durch welche hindurch sich das Gelenkinnenteil aus dem Gelenkgehäuse des montierten Gelenks heraus erstreckt. Gemäß einer ersten Alternative sind die Montageöffnung und die Gelenkinnenteilöffnung identisch und/oder die Montageöffnung bildet die Gelenkinnenteilöffnung und/oder die Gelenkinnenteilöffnung bildet die Montageöffnung. In diesem Fallerstreckt sich das Gelenkinnenteil insbesondere durch die Montageöffnung hindurch aus dem Gelenkgehäuse des montierten Gelenks heraus. Bevorzugt ist gemäß der ersten Alternative das Gelenkgehäuse, abgesehen von der Montageöffnung oder Gelenkinnenteilöffnung, geschlossen ausgebildet. Gemäß einer zweiten Alternative liegen die Montageöffnung und die Gelenkinnenteilöffnung, insbesondere in Richtung der Gehäuseachse, einander gegenüber. Bevorzugt ist gemäß der zweiten Alternative das Gelenkgehäuse, abgesehen von der Montageöffnung und der Gelenkinnenteilöffnung, geschlossen ausgebildet.

Gemäß der ersten Alternative wird das Gelenkgehäuse insbesondere dadurch verschlossen, dass der Rand der Montageöffnung oder Gelenkinnenteilöffnung nach innen umgebogen wird und/oder dass ein, vorzugsweise ringförmiger, Einsatz in die Montageöffnung oder Gelenkinnenteilöffnung eingesetzt wird. Beispielsweise wird durch das Umbiegen des Rands der Montageöffnung oder Gelenkinnenteilöffnung der Einsatz an oder in dem Gelenkgehäuse festgelegt. Bevorzugt erstreckt sich das Gelenkinnenteil durch den Einsatz hindurch.

Gemäß der zweiten Alternative wird das Gelenkgehäuse insbesondere durch einen oder mit einem Gehäusedeckel verschlossen. Bevorzugt wird der Rand der Montageöffnung nach innen umgebogen und dadurch der Gehäusedeckel an oder in dem Gelenkgehäuse festgelegt.

Bevorzugt wird das Verbindungbauteil, insbesondere vor dem Einsetzen des Gelenkgehäuses in das Durchgangsloch, bereitgestellt und/oder hergestellt. Vorteilhaft wird das Verbindungbauteil, insbesondere vor dem Einsetzen des Gelenkgehäuses in das Durchgangsloch, als unbeschichtetes Verbindungbauteil bereitgestellt und/oder hergestellt. Dabei kann das Verbindungsbauteil mit oder ohne Durchgangsloch hergestellt und/oder bereitgestellt werden. Wird das Verbindungsbauteil ohne Durchgangsloch hergestellt und/oder bereitgestellt, wird das Durchgangsloch vorzugsweise nach dem Herstellen und/oder Bereitstellen des Verbindungsbauteils in das Verbindungsbauteil eingebracht. Bevorzugt wird das Durchgangsloch, insbesondere vor dem Einsetzen des Gelenkgehäuses in das Durchgangsloch, in das Verbindungsbäuteil eingebracht. Beispielsweise wird das Durchgangsloch, insbesondere vor dem Einsetzen des Gelenkgehäuses in das Durchgangsloch, durch Stanzen oder Lochstanzen oder Bohren in das Verbindungsbauteil eingebracht. Das Verbindungsbauteil wird vorzugsweise aus Metall hergestellt und/oder besteht vorzugsweise aus Metall. Insbesondere wird das Verbindungsbauteil aus Blech hergestellt und/oder das Verbindungsbauteil besteht insbesondere aus Blech. Beispielsweise ist oder bildet das Verbindungsbauteil einen Flansch. Vorteilhaft ist oder bildet das Verbindungsbauteil ein Strukturbauteil.

Unter einem Strukturbauteil ist insbesondere ein flächenhaftes Metallblechteil zu verstehen, welches beispielsweise gekrümmt oder eben oder teilweise gekrümmt und teilweise eben ausgebildet ist. Flächenhaft bedeutet insbesondere, dass die Materialstärke des Strukturbauteils sehr viel geringer als die übrigen Abmessungen des Strukturbauteils ist. Die Materialstärke ist vorzugsweise konstant über die flächenhafte Erstreckung des Strukturbauteils. Beispielsweise ist das Strukturbauteil massiv ausgebildet ist. Das Strukturbauteil besteht z.B. aus einem einzigen Blech und/oder wird aus einem einzigen Blech hergestellt. Alternativ ist das Strukturbauteil z.B. aus mehreren Blechzuschnitten zusammengesetzt, die insbesondere durch stoffschlüssiges Fügen miteinander verbunden sind oder auf sonstige Weise formschlüssig miteinander verbunden sind.

Bevorzugt wird das Gelenkinnenteil, insbesondere vor der Montage des Gelenks, bereitgestellt und/oder hergestellt. Das Gelenkinnenteil wird vorzugsweise aus Metall hergestellt und/oder besteht vorzugsweise aus Metall. Vorteilhaft ist dem Gelenkinnenteil eine Gelenkinnenteilachse zugeordnet. Insbesondere ist oder wird das Gelenkinnenteil bezüglich der Gelenkinnenteilachse rotationssymmetrisch oder im Wesentlichen rotationssymmetrisch ausgebildet. Vorzugsweise bildet das Gelenkinnenteil einen Kugelzapfen oder eine Kugelhülse. Insbesondere ist der Lagerbereich kugelförmig. Das Gelenk ist oder bildet vorzugsweise ein Kugelgelenk oder Kugelhülsengelenk. Insbesondere ist oder bildet das Gelenk ein Radführungsgelenk. Vorteilhaft ist oder wird das Gelenkinnenteil mit seinem Lagerbereich gleitfähig und/oder gelenkig in dem Gelenkgehäuse gelagert.

Bevorzugt ist oder wird dem Durchgangsloch eine Lochachse zugeordnet. Insbesondere ist oder wird das Durchgangsloch bezüglich der oder einer Lochachse rotationssymmetrisch oder im Wesentlichen rotationssymmetrisch ausgebildet. Vorzugsweise fällt die Lochachse, insbesondere während und/oder nach dem Einsetzen des Gelenkgehäuses in das Durchgangsloch, mit der Gehäuseachse zusammen. Vorteilhaft ist oder wird das Durchgangsloch und/oder die Innenumfangsfläche des Durchgangslochs, insbesondere zum Einsetzen des Gelenkgehäuses in das Durchgangsloch, zylindrisch oder im Wesentlichen zylindrisch ausgebildet. Vorteilhaft ist oder wird das Durchgangsloch kreisrund oder kreisförmig oder im Wesentlichen kreisrund oder kreisförmig ausgebildet.

Das Gelenkgehäuse wird bevorzugt in einer Einsetzrichtung in das Durchgangsloch eingesetzt. Vorzugsweise verläuft die Einsetzrichtung, insbesondere während und/oder nach dem Einsetzen des Gelenkgehäuses in das Durchgangsloch, in Richtung der Gehäuseachse. Vorteilhaft verläuft die Einsetzrichtung, insbesondere während und/oder nach dem Einsetzen des Gelenkgehäuses in das Durchgangsloch, in Richtung der Lochachse. Bevorzugt werden zum Einsetzen des Gelenkgehäuses in das Durchgangsloch das Gelenkgehäuse und das Verbindungsbauteil derart zueinander ausgerichtet, dass die Gehäuseachse mit der Lochachse zusammenfällt, wonach das Gelenkgehäuse in der oder einer, insbesondere in Richtung der Gehäuseachse und/oder Lochachse verlaufenden, Einsetzrichtung in das Durchgangsloch eingesetzt wird. Vorteilhaft erfolgt dieses Ausrichten derart, dass das Gelenkgehäuse mit seiner Gelenkinnenteilöffnung dem Verbindungsbauteil zugewandt ist.

Bevorzugt weist das Gelenkgehäuse vor seinem Einsetzen in das Durchgangsloch, insbesondere quer zur Gelenkachse und/oder quer zur Lochachse und/oder quer zur Einsetzrichtung, in oder zumindest in einem in dem Durchgangsloch anzuordnenden Verbindungsbereich seiner Außenumfangsfläche gegenüber dem Durchgangsloch ein Übermaß auf. Beispielsweise ist der Durchmesser oder Außendurchmesser des Verbindungsbereichs größer als der Durchmesser oder Innendurchmesser des Durchgangslochs und/oder der Innenumfangsfläche des Durchgangslochs. Vorzugsweise wird das Gelenkgehäuse zum Einsetzen in das Durchgangsloch, insbesondere in Einsetzrichtung, in das Durchgangsloch eingepresst und/oder das Einsetzen des Gelenkgehäuses in das Durchgangsloch erfolgt vorzugsweise durch Einpressen des Gelenkgehäuses in das Durchgangsloch, insbesondere in Einsetzrichtung. Durch das Übermaß des Gelenkgehäuses und/oder durch das Einpressen des Gelenkgehäuses in das Durchgangsloch wird insbesondere die kraftschlüssige Verbindung zwischen dem Gelenkgehäuse und Verbindungsbauteil geschaffen oder ausgebildet und/oder das kraftschlüssige Verbinden des Gelenkgehäuses mit dem Verbindungsbauteil erzielt oder bewirkt. Bevorzugt ist oder wird das Gelenkgehäuse in dem oder einem in, dem Durchgangsloch anzuordnenden und/oder angeordneten Verbindungsbereich seiner Außenumfangsfläche, insbesondere zum Einsetzen des Gelenkgehäuses in das Durchgangsloch, zylindrisch oder im Wesentlichen zylindrisch ausgebildet.

Gemäß einer Weiterbildung wird während des Montierens des Gelenks in das Gelenkgehäuse eine Lagerschale eingesetzt, in die der Lagerbereich des Gelenkinnenteils eingebracht wird. Die Lagerschale wird bevorzugt aus Kunststoff hergestellt und/oder besteht bevorzugt aus Kunststoff. Beispielsweise wird das Gelenkinnenteil mit seinem Lagerbereich in die Lagerschale eingeschnappt, insbesondere bevor die Lagerschale und das-Gelenkinnenteil in das Gelenkgehäuse eingesetzt werden. In diesem Fall wird die Lagerschale bevorzugt zusammen mit dem eingeschnappten Gelenkinnenteil in das Gelenkgehäuse eingesetzt. Alternativ wird z.B. zunächst die Lagerschale in das Gelenkgehäuse eingesetzt und anschließend das Gelenkinnenteil in das Gelenkgehäuse eingesetzt und dabei der Lagerbereich in die Lagerschale eingebracht. Die Lagerschale ist oder wird bevorzugt als Kugelschale ausgebildet. Beispielswiese ist die Lagerschale einteilig oder mehrteilig, insbesondere zweiteilig, ausgebildet. Bei einer zweiteiligen Lagerschale wird bevorzugt zunächst ein erster Lagerschalenteil in das Gelenkgehäuse eingesetzt, wonach das Gelenkinnenteil in das Gelenkgehäuse eingesetzt wird, wonach der zweite Lagerschalenteil in das Gelenkgehäuse eingesetzt wird. Anschließend sitzt der Lagerbereich zwischen den Lagerschalenteilen und ist somit in die Lagerschale eingebracht. Bevorzugt ist oder wird das Gelenkinnenteil mit seinem Lagerbereich gleitfähig und/oder gelenkig in der Lagerschale gelagert.

Gemäß einer Weiterbildung erfolgt das stoffschlüssige Verbinden des Gelenkgehäuses mit dem Verbindungsbauteil vor dem Montieren des Gelenks. Hierdurch kann sichergestellt werden, dass durch zum stoffschlüssigen Verbinden des Gelenkgehäuses mit dem Verbindungsbauteil in das Gelenkgehäuse eingetragene Wärme die Lagerschale nicht beschädigt und/oder deren Funktion nicht beeinträchtigt.

Gemäß einer Ausgestaltung erfolgt das Beschichten des Gelenkgehäuses und des Verbindungsbauteils mit dem Oberflächenschutz vor dem Montieren des Gelenks. Somit ist es möglich, das Verbindungsbauteil und das Gelenkgehäuse mit dem Oberflächenschutz zu beschichten, ohne dass die Gefahr besteht, dass ein Teil des Oberflächenschutzes in das bereits montierte Gelenk eindringt und dessen Funktion beeinträchtigt. Der Oberflächenschutz ist insbesondere ein Korrosionsschutz. Das Beschichten erfolgt z.B. durch Galvanisieren und/oder Lackieren. Beispielsweise ist der Oberflächenschutz ein Lack.

Gemäß einer Weiterbildung ist oder wird das Gelenkgehäuse an seinem Außenumfang mit einem Bund versehen, dessen Außenumfang, insbesondere quer zur Gelenkachse und/oder quer zur Lochachse und/oder quer zur Einsetzrichtung, größere Abmessungen als das Durchgangsloch aufweist. Vorzugsweise ist oder wird das Gelenkgehäuse nach seinem Einsetzen in das Durchgangsloch in Einsetzrichtung durch den Bund formschlüssig an dem Verbindungsbauteil gesichert und/oder festgelegt. Hierdurch wird das Gelenkgehäuse in Einsetzrichtung zusätzlich formschlüssig an dem Verbindungsbauteil gesichert. Insbesondere ist der Bund nach dem Einsetzen des Gelenkgehäuses in das Durchgangsloch außerhalb des Durchgangslochs angeordnet. Der Bund bildet gegenüber dem Durchgangsloch vorzugsweise eine Hiriterschneidung. Bevorzugt ist oder wird der Bund, insbesondere in Bezug auf die Gehäuseachse und/oder die Lochachse und/oder die Einsetzrichtung, im Abstand zu dem in dem Durchgangsloch angeordneten und/oder anzuordnenden Verbindungsbereich der Außenumfangsfläche des Gelenkgehäuses vorgesehen. Vorteilhaft weist der Bund im in das Durchgangsloch eingesetzten Zustand des Gelenkgehäuses, insbesondere in Einsetzrichtung und/oder in Richtung der Gehäuseachse und/oder in Richtung der Lochachse, einen Abstand zu dem Verbindungsbauteil auf. Der Bund ist insbesondere ringförmig und/oder bildet bevorzugt einen Ringbund. Wird das Gelenkgehäuse z.B. aus Blech, beispielsweise durch Tiefziehen, hergestellt, erfolgt die Ausbildung des Bundes insbesondere durch Stauchen des Blechs und/oder der Gelenkgehäusewandung.

Das Gelenkgehäuse wird durch Schweißen stoffschlüssig mit dem Verbindüngbauteil verbunden. Bei dem Schweißen handelt es sich z.B. um Schmelzschweißen. Insbesondere handelt es sich bei dem Schweißen um Strahlschweißen, wie z.B. Laserschweißen. Der Schweißstoß und/oder Fügebereich wird zwischen dem Gelenkgehäuse und dem Verbindungbauteil, insbesondere in Einsetzrichtung und/oder in Richtung der Gehäuseachse und/oder in Richtung der Lochachse, vollständig durchgeschweißt. Hierbei wird der Schweißstoß und/oder Fügebereich zwischen dem Gelenkgehäuse und dem Verbindungbauteil, insbesondere in Einsetzrichtung und/oder in Richtung der Gehäuseachse und/oder in Richtung der Lochachse, beidseitig geschweißt. Das beidseitige Schweißen erfolgt z.B. nacheinander oder gleichzeitig. Alternativ wird das Gelenkgehäuse beispielsweise durch Löten stoffschlüssig mit dem Verbindungbauteil verbunden. Bevorzugt erfolgt das stoffschlüssige Verbinden, insbesondere im Fügebereich, entlang des gesamten Umfangs des Verbindungsbereich und/oder Gelenkgehäuses.

Gemäß einer Weiterbildung wird nach dem Montieren des Gelenks ein Dichtungsbalg über das Gelenkinnenteil gestülpt und an dem Gelenkgehäuse befestigt, sodass sich dieser zwischen dem Gelenkgehäuse und dem Gelenkinnenteil erstreckt. Der Dichtungsbalg dient insbesondere dazu, die Gelenkinnenteilöffnung abzudecken und dadurch ein Eindringen von Schmutz und Feuchtigkeit in das Innere des Gelenks zu vermeiden. Bevorzugt ist oder wird in das Gelenkgehäuse und/oder in die Außenumfangsfläche des Gelenkgehäuses eine Haltenut eingebracht, mit welcher der Dichtungsbalg und/oder ein gelenkgehäuseseitiges Ende des Dichtungsbalgs, in Eingriff gebracht wird. Die Haltenut wird vorzugsweise als Ringnut ausgebildet. Vorzugsweise wird der Dichtungsbalg mit einem oder mehreren Spannringen in der Haltenut und/oder an dem Gelenkgehäuse festgelegt. Der oder die Spannringe können von außen auf den Dichtungsbalg aufgebracht oder in diesen integriert sein oder werden. Alternativ kann auch auf Spannringe verzichtet werden. Ferner ist es möglich, auf die Haltenut zu verzichten.

Das Fahrzeugbauteil ist oder bildet insbesondere ein Fahrwerkbauteil. Bevorzugt wird das Fahrzeugbauteil in das Fahrwerk eines Fahrzeugs oder Kraftfahrzeugs eingebaut. Vorzugsweise wird das Gelenkinnenteil mit einer Fahrzeugkomponente oder Fahrwerkkomponente verbunden und/oder das Verbindungsbauteil wird bevorzugt mit einer anderen Fahrzeugkomponente und/oder Fahrwerkkomponente verbunden. Bei dem Fahrzeugbauteil handelt es sich z.B. um ein Flanschgelenk, um ein Einpressgelenk, um einen Querlenker, um einen Längslenker, um eine Zugstrebe, um eine Druckstrebe, um einen Schräglenker, um einen Federlenker oder um eine Spurstange. Beispielsweise ist das Fahrzeugbauteil als Zweipunktlenker, als Dreipunktlenker, als Vierpunktlenker, als ein- oder multiaxial belasteter Lenker oder als ein- oder multiaxial belastetes Gelenk ausgeführt.

Nachfolgend werden einige bevorzugte Merkmale des Verfahrens und die damit verbundenen Vorteile aufgeführt:
1) Das Gelenkgehäuse und das Verbindungbauteil sind beim Fügen insbesondere unbeschichtet. Vorteil: Kein oder wesentlich geringerer Aufwand, um die miteinander zu verschweißenden Teile für das Schweißen vorzubereiten. Insbesondere müssen die zu verschweißenden Teile nicht von einem vorher aufgebrachten dauerhaften Oberflächenschutz befreit werden.
2) Das Gelenk ist beim Fügen insbesondere nicht montiert und nicht verschlossen. Vorteil: Handhabung sowie Lagerung und Transport der zu fügenden Teile ist wesentlich robuster und verursacht dadurch weniger Aufwand. Erläuterung: Oberflächen-Schutzsysteme, insbesondere galvanisch aufgebracht, erfordern in der Regel eine vorsichtige Handhabung, um die Korrosionsschutzwirkung der Beschichtung nicht zu gefährden.
3) Das Gelenkgehäuse erhält insbesondere eine Geometrie zur Aufnahme in das Durchgangsloch mit einem Übermaß. Dies ergibt einen festen Sitz des Gelenkgehäuses nach seinem Einsetzen in das Durchgangsloch als Vorbereitung für das stoffschlüssige Verbinden durch Schweißen. Weiterhin erhält das Gelenkgehäuse insbesondere einen Bund als Hinterschneidung gegenüber dem Durchgangsloch. Vorteil: Die Kontur ist unempfindlich gegen mechanische Beschädigung. Durch die Hinterschneidung wird eine sichere formschlüssige Verbindung in Ausreißrichtung hergestellt, unabhängig vom weiteren stoffschlüssigen Verbinden.
4) Das Verbindungbauteil erhält im Fügebereich des Gelenkgehäuses das Durchgangsloch insbesondere durch Stanzen. Vorteil: Das Lochstanzen lässt sich in den Herstellprozess des z.B. als Blechteil ausgebildeten Verbindungbauteils integrieren. Zusätzliche Kosten für einen separaten Prozess (z.B. Laserstrahlschneiden, Bohren, Fräsen) fallen nicht an.
5) Das Gelenkgehäuse und das Verbindungsbauteil werden insbesondere fest gefügt und durch Schweißen, vorzugsweise durch Schmelzschweißen, stoffschlüssig miteinander verbunden. Bevorzugte Schweißverfahren sind Strahlschweißverfahren, wie z.B. Laserschweißen. Vorteil: Saubere Schweißung ohne Zusatzwerkstoff und ohne Bildung von Schlacke. Die Schweißnaht muss für eine eventuelle Oberflächenbehandlung als Korrosionsschutz nicht mechanisch gereinigt werden.
6) Ein Spalt im Fügebereich des Gelenkgehäuses wird insbesondere durch das Schmelzschweißen vermieden, da ein eventuell nach dem Fügen noch vorhandener Luftspalt oder Fügespalt vorzugsweise durch Schmelze aufgefüllt wird, sodass nach dem Schweißen kein Spalt mehr vorhanden ist. Vorteil: Vermeidung von Spaltkorrosion.
7) Die Schweißverbindung ist insbesondere so gestaltet, dass möglichst die gesamte für die Verbindung zur Verfügung stehende Fläche der zu fügenden Bauteile angebunden wird (Durchschweißung). Dies kann z.B. durch eine zweiteilige Schweißnaht erfolgen, wobei der Schweißstoß vorzugsweise von zwei Seiten geschweißt wird (Hauptschweißung und Gegenlage). Vorteil: Es entsteht eine Verbindung mit optimaler Festigkeit.
8) Der Oberflächenschutz zur Vermeidung von Korrosion wird insbesondere nach dem Schweißen und vor dem Montieren des Kugelgelenkes aufgebracht. Vorteil: Keine Beeinträchtigung der Korrosionsschutzeigenschaften durch Abbrand/Abschmelzen der Korrosionsschutzschicht im Fügebereich.
9) Das Gelenk wird insbesondere nach dem Fügen von Verbindungsbauteil und Gelenkgehäuse montiert und verschlossen. Vorteil: Das Verbindungsbauteil kann mit bereits integriertem Gelenkgehäuse (z.B. für Querlenker, Fahrwerkslenker) als Komponente montagefertig bezogen werden. Es entsteht kein Abfall mit Beschichtungsrückständen.
10) Beispielsweise kann das Gelenkgehäuse umlaufend mit veränderlicher oder gleicher Höhe, insbesondere in Richtung der Gehäuseachse, ausgeführt werden, z.B. mit länglicher Öffnung oder Gelenkinnenteilöffnung im verschlossenen Zustand. Somit kann z.B. einem Ausreißen und/oder Aushebeln des Gelenkinnenteils ein größerer Widerstand entgegen gesetzt werden, insbesondere bei gleichzeitiger Wahrung der Beweglichkeit des Gelenkinnenteils entsprechend den kinematischen Anforderungen.

Die Erfindung wird nachfolgend anhand einer bevorzugten Ausführungsform unter Bezugnahme auf die Zeichnung beschrieben. In der Zeichnung zeigen:
- Fig. 1: eine perspektivische Ansicht eines Verbindungsbauteils mit einem Durchgangsloch und eines einseitig offenen Gelenkgehäuses,
- Fig. 2: eine perspektivische Ansicht des Verbindungsbauteils und des Gelenkgehäuses in einem in das Durchgangslöch eingesetzten Zustand,
- Fig. 3: eine Schnittansicht durch das Verbindungsbauteil und das in das Durchgangsloch eingesetzte Gelenkgehäuse in einem mit dem Verbindungsbauteil verschweißtem Zustand,
- Fig. 4: eine perspektivische Ansicht des Verbindungsbauteils und des mit diesem verschweißten Gelenkgehäuses mit eingesetzter Lagerschale und eingesetztem Gelenkinnenteil nach einem Verschließen des Gelenkgehäuse,
- Fig. 5: eine perspektivische Ansicht des Verbindungsbauteils und des mit diesem verschweißten Gelenkgehäuses mit eingesetzter Lagerschale und eingesetztem Gelenkinnenteil nach einem Verschließen des Gelenkgehäuse,
- Fig. 6: eine perspektivische Ansicht des Verbindungsbauteils und des mit diesem verschweißten Gelenkgehäuses im verschlossenen Zustand nach dem Montieren eines Dichtungsbalgs und
- Fig. 7: einen Längsschnitt durch das Verbindungsbauteil und das mit diesem verschweißte Gelenkgehäuse im verschlossenen Zustand nach dem Montieren des Dichtungsbalgs, wobei in Befestigungslöcher des Verbindungsbauteils Befestigungsbolzen eingebracht sind.

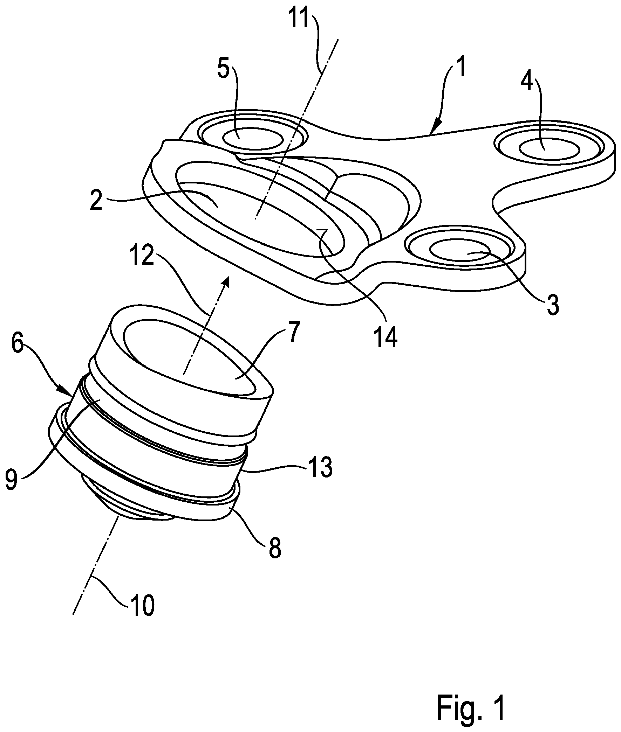

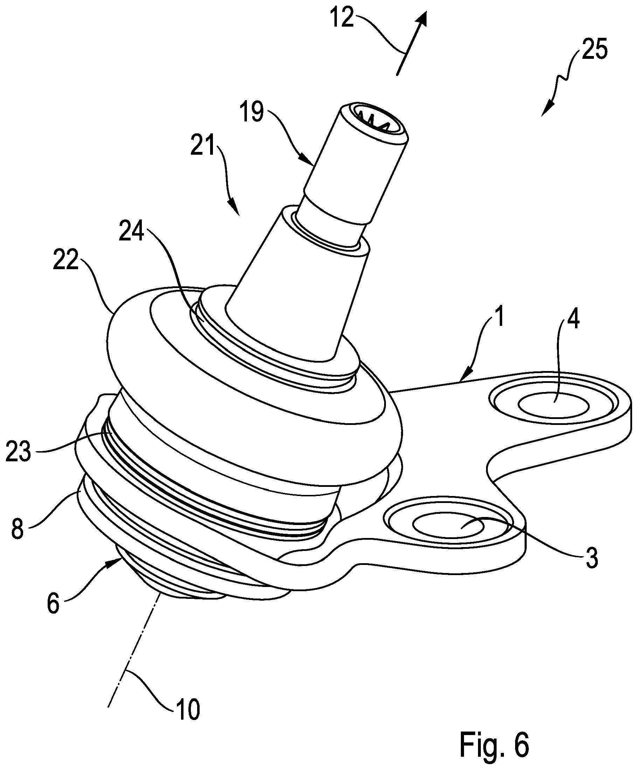

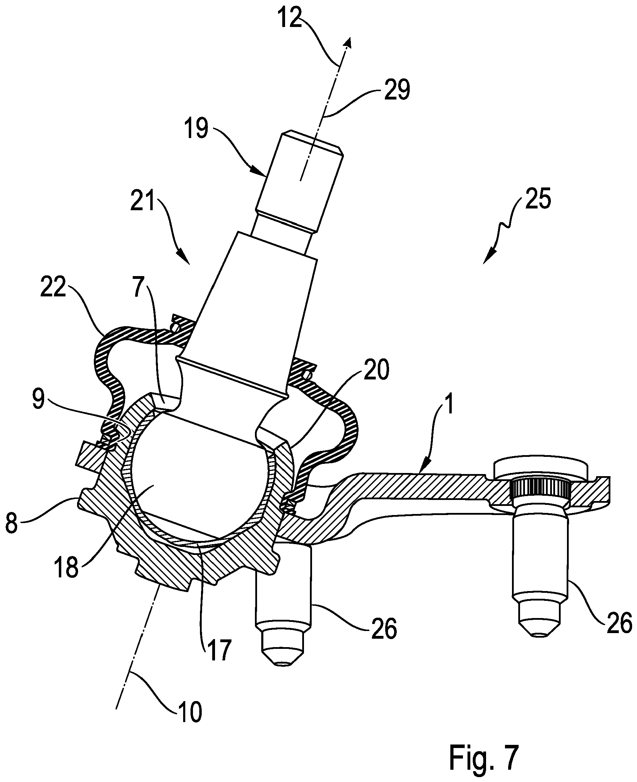

Die Fig. 1 bis 6 verdeutlichen unterschiedliche Schritte eines Verfahrens zum Herstellen eines Fahrzeugbauteils, welches in perspektivischer Ansicht aus Fig. 6 und in Schnittansicht aus Fig. 7 ersichtlich ist. Dabei zeigt Fig. 1 in perspektivischer Ansicht ein aus Blech hergestelltes Verbindungsbauteil 1, in welches durch Stanzen ein Durchgangsloch 2 eingebracht ist. Zusätzlich sind in das Verbindungsbauteil 1 durchgehende Befestigungslöcher 3, 4 und 5 eingebracht. Ferner zeigt Fig.1 in perspektivischer Ansicht ein aus Metall hergestelltes, topfförmiges Gelenkgehäuse 6, welches mit einer Gelenkinnenteilöffnung 7 versehen ist. Das Gelenkgehäuse 6 weist an seinem Außenumfang einen Ringbund 8 und eine Ringnut 9 auf.

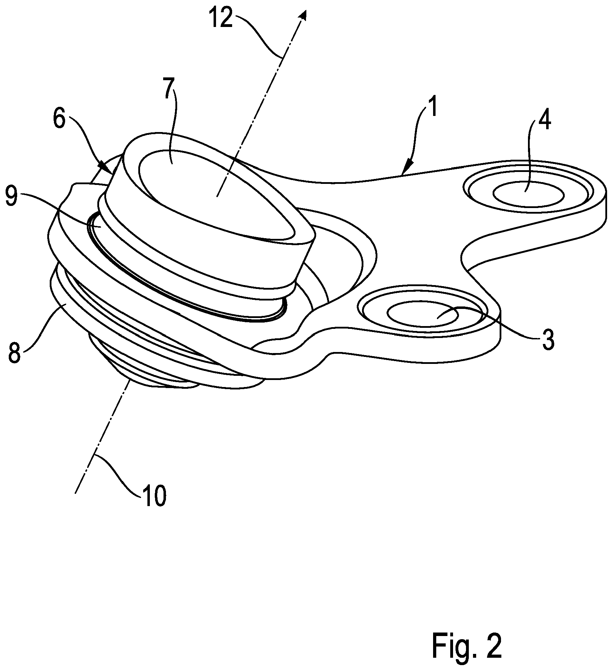

Dem Gelenkgehäuse 6 ist eine Gehäuseachse 10 zugeordnet, bezüglich der das Gelenkgehäuse 6 rotationssymmetrisch ausgebildet ist. Ferner ist dem Durchgangsloch 2 eine Lochachse 11 zugeordnet, bezüglich der das Durchgangsloch 2 rotationssymmetrisch ausgebildet ist. Das Gelenkgehäuse 6 und das Verbindungsbauteil 1 werden derart zueinander ausgerichtet, dass die Gehäuseachse 10 mit der Lochachse 11 zusammenfällt, wobei das Gelenkgehäuse 6 mit seiner Gelenkinnenteilöffnung 7 dem Verbindungsbauteil 1 zugewandt ist. Nun wird das Gelenkgehäuse 6 in einer in Richtung der Gehäuseachse 10 verlaufenden Einsetzrichtung 12 in das Durchgangsloch 2 eingesetzt, wobei der in das Durchgangsloch eingesetzte Zustand des Gelenkgehäuses aus Fig. 2 ersichtlich ist. Vor dem Einsetzen des Gelenkgehäuses 6 in das Durchgangsloch 2 weist das Gelenkgehäuse 6 in einem in dem Durchgangsloch 2 anzuordnenden Verbindungsbereich 13 seiner Außenumfangsfläche einen größeren Durchmesser als das Durchgangsloch 2 auf, sodass das Gelenkgehäuse 6 zum Einsetzen in das Durchgangsloch 2 in das Durchgangsloch 2 eingepresst wird. Nach dem Einsetzen des Gelenkgehäuses 6 in das Durchgangsloch 2 sitzt das Gelenkgehäuse 6 daher mit einer Presspassung in dem Durchgangsloch 2, sodass das Gelenkgehäuse 6 kraftschlüssig mit dem Verbindungsbauteil 1 verbunden ist. Der Verbindungsbereich 13 der Außenumfangsfläche des Gelenkgehäuses ist dabei zylindrisch ausgebildet. Ferner ist die Innenumfangsfläche 14 des Durchgangslochs 2 im Wesentlichen zylindrisch ausgebildet, wobei verfahrensbedingte Abweichungen, insbesondere Stanzeinzug, Stanzausbruch, Grat keine wesentliche Behinderung oder Beeinträchtigung darstellen.

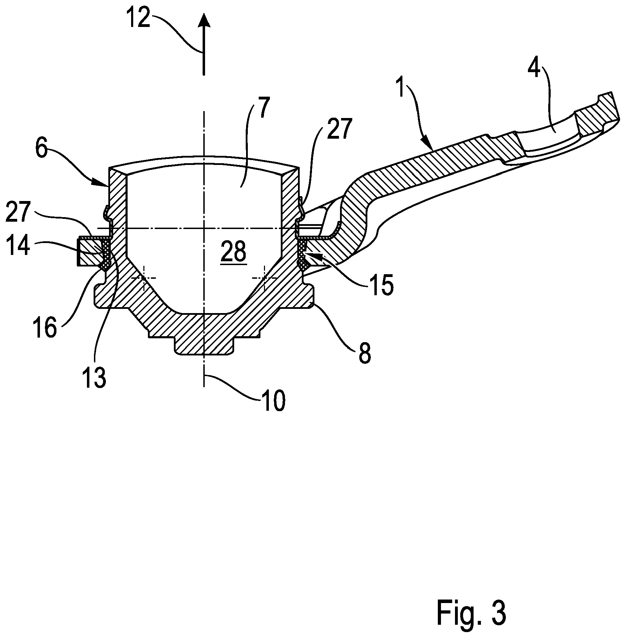

Nach dem Einsetzen des Gelenkgehäuses 6 in das Durchgangsloch 2 wird das Gelenkgehäuse 6 mit dem Verbindungsbauteil 1 verschweißt, wobei das mit dem Verbindungsbauteil 1 verschweißte Gelenkgehäuse in Schnittdarstellung aus Fig. 3 ersichtlich ist. Das Schweißen erfolgt derart, dass der Schweißstoß 15 zwischen dem Gelenkgehäuse 6 und dem Verbindungsbauteil 1 in Richtung der Gehäuseachse 10 vollständig durchgeschweißt wird. Ferner werden das Gelenkgehäuse 6 und das Verbindungsbauteil 1 rings des gesamten Verbindungsbereichs 13 miteinander verschweißt, sodass die durch das Schweißen gebildete Schweißnaht 16 ringförmig ist. Aus Fig. 3 ist ersichtlich, dass durch das Schweißen am Ort des Verbindungsbereichs 13 und der Innenumfangsfläche 14 Material aufgeschmolzen wurde, welches nun die Schweißnaht 16 bildet und den Raum zwischen dem Gelenkgehäuse 6 und dem Verbindungsbauteil 1 vollständig ausfüllt. Ferner ist aus Fig. 3 ersichtlich, dass das Gelenkgehäuse 6 an dem Verbindungsbauteil 1 durch den Ringbund 8 in Einsetzrichtung 12 formschlüssig gesichert ist, für den Fall, dass die Schweißverbindung versagen sollte.

Nach dem Schweißen werden das Gelenkgehäuse 6 und das Verbindungsbauteil 1 mit einem Oberflächenschutz 27 beschichtet, der in Fig. 3 lediglich schematisch und nur teilweise angedeutet ist. Insbesondere wird die gesamte Oberfläche der aus dem Gelenkgehäuse 6 und dem Verbindungsbauteil 1 gebildeten Baugruppe mit dem Oberflächenschutz 27 beschichtet. Alternativ wird z.B. die gesamte Oberfläche der Baugruppe bis auf den Innenraum 28 und/oder den Verschlussbereich des Gelenkgehäuses 6 mit dem Oberflächenschutz 27 beschichtet.

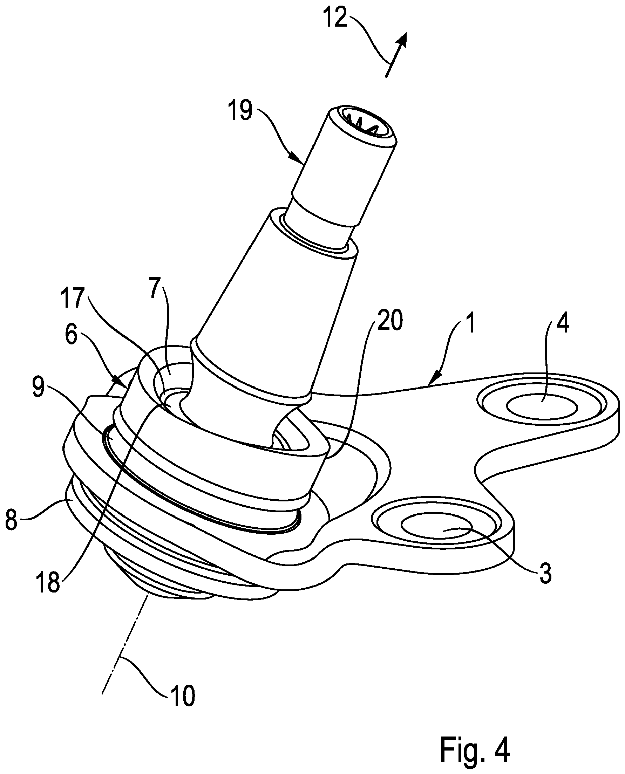

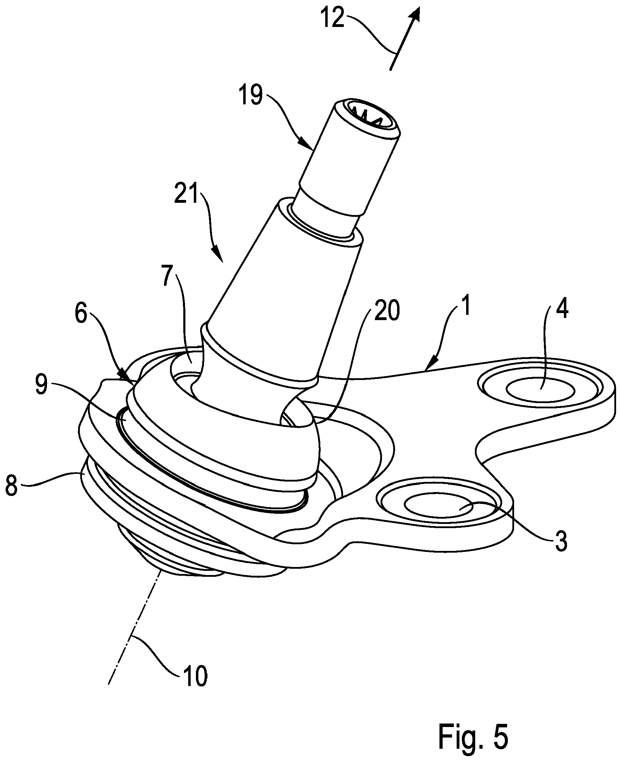

Nach dem Beschichten wird ein Gelenk montiert, indem zunächst eine Lagerschale 17 aus Kunststoff und ein einen kugelförmigen Lagerbereich 18 aufweisendes Gelenkinnenteil 19 aus Metall durch die Gelenkinnenteilöffnung 7 hindurch in das Gelenkgehäuse 6 eingesetzt werden, wobei der Lagerbereich 18 in die Lagerschale 17 eingebracht wird. Die Gelenkinnenteilöffnung 7 bildet somit gleichzeitig eine Montageöffnung. Ferner bildet das Gelenkinnenteil 19 einen Kugelzapfen und die Lagerschale 18 eine Kugelschale. Das Gelenkgehäuse 6 mit eingesetzter Lagerschale 17 und mit eingesetztem Gelenkinnenteil 19 ist in perspektivischer Ansicht aus Fig. 4 ersichtlich. Dabei ist erkennbar, dass sich das Gelenkinnenteil 19 durch die Gelenkinnenteilöffnung 7 hindurch aus dem Gelenkgehäuse 6 heraus erstreckt. Anschließend wird das Gelenkgehäuse 6 verschlossen, indem ein die Gelenkinnenteilöffnung 7 begrenzender Rand 20 des Gelenkgehäuses 6 nach innen umgebogen wird, sodass der Lagerbereich 18 zusammen mit der Lagerschale 17 in dem Gelenkgehäuse 6 eingeschlossen wird. Aus Fig. 5 ist das verschlossene Gelenkgehäuse 6 in perspektivischer Ansicht aus Fig. 5 ersichtlich. Das derart montierte Gelenk bildet ein Kugelgelenk und wird mit dem Bezugszeichen 21 bezeichnet.

Anschließend wird ein Dichtungsbalg 22 über das Gelenkinnenteil 19 gestülpt und an dem Gelenkgehäuse 6 befestigt, sodass sich der Dichtungsbalg 22 zwischen dem Gelenkgehäuse 6 und dem Gelenkinnenteil 19 erstreckt und die Gelenkinnenteilöffnung 7 abdeckt. Dabei greift der Dichtungsbalg 22 mit seinem gelenkgehäuseseitigen Ende in die Ringnut 9 ein und wird in dieser durch einen Spannring 23 fixiert. Ferner wird der Dichtungsbalg 22 an seinem gelenkinnenteilseitigen Ende durch einen Spannring 24 dichtend an das Gelenkinnenteil 19 angelegt. Das Gelenk 21 mit montiertem Dichtungsbalg 22 ist in perspektivischer Ansicht aus Fig. 6 ersichtlich. Das Fahrzeugbauteil ist somit hergestellt und in Fig. 6 mit dem Bezugszeichen 25 bezeichnet. Wie aus Fig. 6 ersichtlich, bildet das Fahrzeugbauteil 25 hier ein Flanschgelenk.

Aus Fig. 7 ist ein Längsschnitt durch das Fahrzeugbauteil 25 ersichtlich, sodass die Lagerschale 17 und der kugelförmige Lagerbereich 18 des Gelenkinnenteils 19 deutlich erkennbar sind. Ferner sind in die Befestigungslöcher 3 bis 5 Befestigungsbolzen 26 eingebracht, die zur Befestigung des Verbindungsbauteils 1 an einer Fahrzeugkomponente dienen. Der in das Befestigungsloch 3 eingebrachte Befestigungsbolzen 26 ist aufgrund der Schnittdarstellung aus Fig. 7 allerdings nicht ersichtlich.

Dem Gelenkinnenteil 19 ist eine Gelenkinnenteilachse 29 zugeordnet, bezüglich der das Gelenkinnenteil 19 rotationssymmetrisch ausgebildet ist. In den Figuren ist das Gelenkinnenteil 19 in einem nicht ausgelenkten Zustand gezeigt, sodass die Gelenkinnenteilachse 29 mit der Gehäuseachse 10 zusammenfällt.

### Bezugszeichen

- 1: Verbindungsbauteil
- 2: Durchgangsloch im Verbindungsbauteil
- 3: Befestigungsloch im Verbindungsbauteil
- 4: Befestigungsloch im Verbindungsbauteil
- 5: Befestigungsloch im Verbindungsbauteil
- 6: Gelenkgehäuse
- 7: Gelenkinnenteilöffnung des Gelenkgehäuses
- 8: Ringbund des Gelenkgehäuses
- 9: Ringnut des Gelenkgehäuses
- 10: Gehäuseachse
- 11: Lochachse
- 12: Einsetzrichtung
- 13: Verbindungsbereich des Gelenkgehäuses
- 14: Innenumfangsfläche des Durchgangslochs
- 15: Schweißstoß
- 16: Schweißnaht
- 17: Lagerschale
- 18: Lagerbereich des Gelenkinnenteils
- 19: Gelenkinnenteil
- 20: Rand des Gelenkgehäuses
- 21: Gelenk
- 22: Dichtungsbalg
- 23: Spannring
- 24: Spannring
- 25: Fahrzeugbauteil
- 26: Befestigungsbolzen
- 27: Oberflächenschutz
- 28: Innenraum des Gelenkgehäuses
- 29: Gelenkinnenteilachse

## Patentansprüche

1. Verfahren zur Herstellung eines Fahrzeugbauteils, mit den Verfahrensschritten: Einsetzen eines zumindest einseitig offenen Gelenkgehäuses (6) in ein Durchgangsloch (2) eines Verbindungsbauteils (1), stoffschlüssiges Verbinden des in das Durchgangsloch (2) eingesetzten Gelenkgehäuses (6) mit dem Verbindungbauteil (1), Beschichten des Gelenkgehäuses (6) und des Verbindungsbauteils (1) mit einem Oberflächenschutz (27), wobei das stoffschlüssige Verbinden des Gelenkgehäuses (6) mit dem Verbindungbauteil (1) vor dem Beschichten des Gelenkgehäuses (6) und des Verbindungsbauteils (1) mit dem Oberflächenschutz (27) erfolgt, sodass das Gelenkgehäuse (6) und das Verbindungbauteil (1) im unbeschichteten Zustand stoffschlüssig miteinander verbunden werden, wobei das Gelenkgehäuse (6) durch Schweißen stoffschlüssig mit dem Verbindungbauteil (1) verbunden wird, und Montieren eines Gelenks (21) durch Einsetzen eines einen Lagerbereich (18) aufweisenden Gelenkinnenteils (19) in das Gelenkgehäuse (6) und Verschließen des Gelenkgehäuses (6), sodass der Lagerbereich (18) in dem Gelenkgehäuse (6) eingeschlossen wird und das Gelenkinnenteil (19) sich aus dem Gelenkgehäuse (6) heraus erstreckt, wobei das Gelenkgehäuse (6) mit dem Verbindungsbauteil (1) vor dem stoffschlüssigen Verbinden des Gelenkgehäuses (6) mit dem Verbindungsbauteil (1) kraftschlüssig verbunden wird, **dadurch gekennzeichnet, dass** der Schweißstoß (15) zwischen dem Gelenkgehäuse (6) und dem Verbindungbauteil (1) beidseitig geschweißt und vollständig durchgeschweißt wird.

2. Verfahren nach Anspruch 1, **dadurch gekennzeichnet, dass** das Gelenkgehäuse (6) vor seinem Einsetzen in das Durchgangsloch (2) in einem in dem Durchgangsloch (2) anzuordnenden Verbindungsbereich (13) seiner Außenumfangsfläche gegenüber dem Durchgangsloch (2) ein Übermaß aufweist und zum Einsetzen in das Durchgangsloch (2) in das Durchgangsloch (2) eingepresst wird.

3. Verfahren nach Anspruch 1 oder 2, **dadurch gekennzeichnet, dass** das Gelenkgehäuse (6) in dem oder einem in dem Durchgangsloch (2) anzuordnenden Verbindungsbereich (13) seiner Außenumfangsfläche zylindrisch oder im Wesentlichen zylindrisch ausgebildet ist oder wird.

4. Verfahren nach einem der vorangehenden Ansprüche, **dadurch gekennzeichnet, dass** das Durchgangsloch (2) zylindrisch oder im Wesentlichen zylindrisch ausgebildet ist oder wird.

5. Verfahren nach einem der vorangehenden Ansprüche, **dadurch gekennzeichnet, dass** während des Montierens des Gelenks (21) in das Gelenkgehäuse (6) eine Lagerschale (17) eingesetzt wird, in die der Lagerbereich (18) des Gelenkinnenteils (19) eingebracht wird.

6. Verfahren nach einem der vorangehenden Ansprüche, **dadurch gekennzeichnet, dass** das stoffschlüssige Verbinden des Gelenkgehäuses (6) mit dem Verbindungsbauteil (10) vor dem Montieren des Gelenks (21) erfolgt.

7. Verfahren nach einem der vorangehenden Ansprüche, **dadurch gekennzeichnet, dass** das Beschichten des Gelenkgehäuses (6) und des Verbindungsbauteils (1) mit dem Oberflächenschutz (27) vor dem Montieren des Gelenks (21) erfolgt.

8. Verfahren nach einem der vorangehenden Ansprüche, **dadurch gekennzeichnet, dass** das Gelenkgehäuse (6) an seinem Außenumfang mit einem Bund (8) versehen wird, dessen Außenumfang größere Abmessungen als das Durchgangsloch (2) aufweist, sodass das Gelenkgehäuse (6) nach seinem Einsetzen in das Durchgangsloch (2) in Einsetzrichtung (12) durch den Bund (8) formschlüssig an dem Verbindungsbauteil (1) gesichert ist.

9. Verfahren nach einem der vorangehenden Ansprüche, **dadurch gekennzeichnet, dass** das Verbindungsbauteil (1) aus Blech hergestellt und das Durchgangsloch (2) durch Stanzen in das Verbindungsbauteil (1) eingebracht wird.

10. Verfahren nach einem der vorangehenden Ansprüche, **dadurch gekennzeichnet, dass** nach dem Montieren des Gelenks (21) ein Dichtungsbalg (22) über das Gelenkinnenteil (19) gestülpt und an dem Gelenkgehäuse (6) befestigt wird, sodass sich der Dichtungsbalg (22) zwischen dem Gelenkgehäuse (6) und dem Gelenkinnenteil (19) erstreckt.

## Claims

1. Method for producing a vehicle component, having the method steps: inserting a joint housing (6), which is open at least on one side, into a passage hole (2) of a connecting component (1), cohesively connecting the joint housing (6), inserted into the passage hole (2), to the connecting component (1), coating the joint housing (6) and the connecting component (1) with a surface protector (27), wherein the cohesive connection of the joint housing (6) to the connecting component (1) is performed prior to the coating of the joint housing (6) and of the connecting component (1) to the surface protector (27), such that the joint housing (6) and the connecting component (1) are cohesively connected to one another in the non-coated state, wherein the joint housing (6) is cohesively connected to the connecting component (1) by welding, and assembling a joint (21) by inserting a joint inner part (19), which has a bearing region (18), into the joint housing (6) and closing the joint housing (6), such that the bearing region (18) is enclosed in the joint housing (6) and the joint inner part (19) extends out of the joint housing (6), wherein the joint housing (6) is connected in non-positively locking fashion to the connecting component (1) prior to the cohesive connection of the joint housing (6) to the connecting component (1), **characterized in that** the welded joint (15) between the joint housing (6) and the connecting component (1) is welded on both sides and is fully through-welded.

2. Method according to Claim 1, **characterized in that**, prior to being inserted into the passage hole (2), the joint housing (6), in a connecting region (13), for arrangement in the passage hole (2), of its outer circumferential surface, has an oversize in relation to the passage hole (2) and, for insertion into the passage hole (2), is pressed into the passage hole (2).

3. Method according to Claim 1 or 2, **characterized in that** the joint housing (6) is of cylindrical or substantially cylindrical form, or is formed in a cylindrical or substantially cylindrical manner, in the or a connecting region (13), for arrangement in the passage hole (2), of its outer circumferential surface.

4. Method according to any of the preceding claims, **characterized in that** the passage hole (2) is of cylindrical or substantially cylindrical form or is formed in a cylindrical or substantially cylindrical manner.

5. Method according to any of the preceding claims, **characterized in that**, during the assembly of the joint (21), a bearing shell (17) is inserted into the joint housing (6), into which bearing shell the bearing region (18) of the joint inner part (19) is introduced.

6. Method according to any of the preceding claims, **characterized in that** the cohesive connection of the joint housing (6) to the connecting component (10) takes place prior to the assembly of the joint (21).

7. Method according to any of the preceding claims, **characterized in that** the coating of the joint housing (6) and of the connecting component (1) with the surface protector (27) is performed prior to the installation of the joint (21).

8. Method according to any of the preceding claims, **characterized in that** the joint housing (6) is equipped, on its outer circumference, with a collar (8), the outer circumference of which has larger dimensions than the passage hole (2), such that the joint housing (6), after being inserted into the passage hole (2) in an insertion direction (12), is secured in positively locking fashion on the connecting component (1) by means of the collar (8) .

9. Method according to any of the preceding claims, **characterized in that** the connecting component (1) is produced from sheet metal, and the passage hole (2) is formed into the connecting component (1) by punching.

10. Method according to any of the preceding claims, **characterized in that**, after the installation of the joint (21), a seal bellows (22) is fitted over the joint inner part (19) and is fastened to the joint housing (6), such that the seal bellows (22) extends tween the joint housing (6) and the joint inner part (19).

## Revendications

1. Procédé de fabrication d'une pièce de véhicule, comprenant les étapes de procédé suivantes : insertion d'un boîtier articulé (6) au moins ouvert d'un côté dans un trou de passage (2) d'une pièce de connexion (1), connexion par liaison de matière du boîtier articulé (6) inséré dans le trou de passage (2) à la pièce de connexion (1), revêtement du boîtier articulé (6) et de la pièce de connexion (1) avec une protection de surface (27), la connexion par liaison de matière du boîtier articulé (6) à la pièce de connexion (1) s'effectuant avant le revêtement du boîtier articulé (6) et de la pièce de connexion (1) avec la protection de surface (27), de telle sorte que le boîtier articulé (6) et la pièce de connexion (1) soit connectées l'un à l'autre par liaison de matière dans l'état non revêtu, le boîtier articulé (6) étant connecté à la pièce de connexion (1) par liaison de matière par soudage, et montage d'une articulation (21) par insertion d'une partie intérieure d'articulation (19) présentant une zone de palier (18) dans le boîtier articulé (6), et fermeture du boîtier articulé (6) de telle sorte que la zone de palier (18) soit enfermée dans le boîtier articulé (6) et que la partie intérieure d'articulation (19) s'étende hors du boîtier articulé (6), le boîtier articulé (6) étant connecté par force à la pièce de connexion (1) avant la connexion par liaison de matière du boîtier articulé (6) à la pièce de connexion (1), **caractérisé en ce que** le joint soudé (15) entre le boîtier articulé (6) et la pièce de connexion (1) est soudé des deux côtés et est soudé avec pénétration complète.

2. Procédé selon la revendication 1, **caractérisé en ce que** le boîtier articulé (6), avant son insertion dans le trou de passage (2), présente, par rapport au trou de passage (2), un surdimensionnement dans une zone de connexion (13) de sa surface périphérique extérieure devant être disposée dans le trou de passage (2) et, pour l'insertion dans le trou de passage (2), est enfoncé par pressage dans le trou de passage (2).

3. Procédé selon la revendication 1 ou 2, **caractérisé en ce que** le boîtier articulé (6) est réalisé sous forme cylindrique ou essentiellement cylindrique dans la ou dans une zone de connexion (13) de sa surface périphérique extérieure devant être disposée dans le trou de passage (2).

4. Procédé selon l'une quelconque des revendications précédentes, **caractérisé en ce que** le trou de passage (2) est réalisé sous forme cylindrique ou essentiellement cylindrique.

5. Procédé selon l'une quelconque des revendications précédentes, **caractérisé en ce que** pendant le montage de l'articulation (21) dans le boîtier articulé (6), on utilise une coque de palier (17) dans laquelle est introduite la zone de palier (18) de la partie intérieure d'articulation (19).

6. Procédé selon l'une quelconque des revendications précédentes, **caractérisé en ce que** la connexion par liaison de matière du boîtier articulé (6) à la pièce de connexion (10) s'effectue avant le montage de l'articulation (21).

7. Procédé selon l'une quelconque des revendications précédentes, **caractérisé en ce que** le revêtement du boîtier articulé (6) et de la pièce de connexion (1) avec la protection de surface (27) s'effectue avant le montage de l'articulation (21) .

8. Procédé selon l'une quelconque des revendications précédentes, **caractérisé en ce que** le boîtier articulé (6) est pourvu au niveau de sa périphérie extérieure d'un épaulement (8) dont la périphérie extérieure présente des dimensions plus grandes que le trou de passage (2) de telle sorte que le boîtier articulé (6), après son insertion dans le trou de passage (2), soit fixé dans la direction d'insertion (12) par l'épaulement (8) par engagement par correspondance de formes au niveau de la pièce de connexion (1).

9. Procédé selon l'une quelconque des revendications précédentes, **caractérisé en ce que** la pièce de connexion (1) est fabriquée en tôle et le trou de passage (2) est pratiqué par estampage dans la pièce de connexion (1).

10. Procédé selon l'une quelconque des revendications précédentes, **caractérisé en ce qu'**après le montage de l'articulation (21), un soufflet d'étanchéité (22) est enfilé par-dessus la partie intérieure d'articulation (19) et est fixé au boîtier articulé (6) de telle sorte que le soufflet d'étanchéité (22) s'étende entre le boîtier articulé (6) et la partie intérieure d'articulation (19).
